# EUROPEAN PATENT APPLICATION

(11) **EP 3 017 685 A1**
(43) Date of publication of application: **11.05.2016**
(21) Application number: 14192459.7
(22) Date of filing: 10.11.2014
(51) Int. Cl.: A01F 29/00, A01F 29/02, A01F 29/10

(54) **Agricultural shredder and use thereof**

(71) Applicant: V.D.W. Constructie, 9950 Waarschoot (BE)
(72) Inventor: Willems, Erwin, B-9950 Waarschoot (BE)
(74) Representative: Gevers Patents

(57) **Abstract**

Agricultural shredder (1), comprising:
a) an input opening (2) for loading the agricultural product,
b) a shredding unit (3) for shredding the agricultural product,
c) an output (4) for outputting the shredded agricultural product,
d) a feeding unit (5) for transporting and feeding the agricultural product to the shredding unit (3) and
e) a blow unit (8) for blowing the shredded agricultural product from the shredding unit (3) to and out off the output (4), **characterized in that**

the feeding unit (5) comprises a feed element (9), the feed element (9) being mounted around a rotational feed axis (10) positioned substantially along the guiding direction (6) and being provided to rotate such as to transport and feed the agricultural product to the shredding unit (3) along the guiding direction (6).

## Description

### Technical field

The present invention relates to an agricultural shredder for shredding straw, more in particular straw bales, for example rectangular straw bales, root crops, for example beets, potatoes, etc. and the use thereof.

### Background art

Agricultural shredders according to the preamble of the first claim are already known from the prior art. EP2436261 for example describes an agricultural shredder for shredding bedding products such as for example hay, straw, cornstalks, etc. The agricultural shredder comprises an input opening for loading the agricultural product into the shredder, a shredding unit for shredding the agricultural product, an output for outputting the agricultural product, a feeding unit for transporting and feeding the agricultural product to the shredding unit along a guiding direction and a blow unit for blowing the shredded agricultural product from the shredding unit to and out off the output.

The feeding unit more in particular comprises a feeding carpet for moving the agricultural product, in this case bedding product, towards the shredding unit.

However it has been found that such a feeding carpet substantially complicates the agricultural shredder by adding weight to the shredder, by increasing the risk that the shredder malfunctions, by increasing the power needed to drive the shredder, by increasing the dimensions of the shredder, etc.

### Disclosure of the invention

It is an aim of the current invention to decrease the complexity of agricultural shredders.

This aim is achieved according to the invention with an agricultural shredder comprising the technical features according to the characterizing part of the first claim.

Thereto, the agricultural shredder is characterized in that the feeding unit comprises a feed element. The feed element is mounted around a rotational feed axis positioned substantially along the guiding direction. Moreover, the feeding element is provided to rotate such as to transport and feed the agricultural product to the shredding unit along the guiding direction.

An agricultural shredder comprising such feed element has been found to allow removal of the feeding carpet allowing decreasing the complexity of the agricultural shredder while nevertheless allowing sufficient supply of agricultural product to the shredding unit.

According to preferred embodiments of the current invention, the feed element is provided for pulling the agricultural product to the shredding unit. It has been surprisingly found that pulling the agricultural product towards the shredding unit is at least as efficient, or even better, as pushing it towards the shredding unit.

According to preferred embodiments of the current invention, the feed element comprises an engaging element attached to a rotational feed shaft, for example a screw helically wound around the rotational feed shaft. The engaging element can for example comprise knifes, possibly in addition to the screw. The rotational feed shaft is positioned along the rotational feed axis. The rotational feed shaft is provided to rotate the feed element, in this case the engaging element, more specifically, screw, around the rotational feed axis. The screw has been found to allow to move the agricultural product towards the shredding unit. Moreover it has been found that such the screw is far less prone to malfunctioning than, for example, a feeding carpet.

Moreover, in case the agricultural product is in the form of compacted material, such as for example a bale, for example a straw bale, it has been found that the engaging element allows to more easily disintegrate the compacted nature of the compacted material. For example, it has been found that the engaging element allows disintegrating a bale allowing the shredding unit to improve its shredding action. Without wanting to be bound by any theory it is proposed that the engaging element, preferably being directed at substantially the centre of the compacted material, for example bale, by affecting the compacted nature of the compacted material near the centre of the compacted material, surprisingly also affects the compacted nature of the whole compacted material instead of having merely an effect on the centre of the compacted material.

According to embodiments of the present invention, the blow unit comprises a blow element mounted around a rotational blow axis positioned substantially along the guiding direction and being provided to rotate such as to blow the shredded agricultural product from the shredding unit to and out off the output.

According to further embodiments of the present invention, the rotational feed shaft is positioned along the rotational blow axis.

According to further embodiments of the present invention, the rotational feed shaft is fixed to the rotational centre of the blow element.

According to further embodiments of the present invention the blow element is fixed to a rotational blow shaft positioned along the rotational blow axis, the rotational blow shaft being provided to rotate the blow element around the rotational blow axis. According to further embodiments of the present invention, the blow shaft and the feed shaft are coaxially mounted.

According to further embodiments of the present invention, the blow shaft and the feed shaft are fixed to each other. Such embodiments have been found to allow decreasing the number of independently moving elements in the shredder to decrease the risk of malfunctions.

According to embodiments of the present invention, the shredding unit comprises a shredding element mounted around a rotational shred axis positioned substantially along the guiding direction and being provided to rotate such as to shred the agricultural product.

With shredding, in the context of the current application is for example not only meant the cutting up of the agricultural material into smaller pieces, as for example when cutting up potatoes are beets into smaller pieces for further processing as for example animal fodder, but also for example, as alternative to or next to the cutting up sense, the loosening of compacted material into individual components, for example the loosening of individual particles of for example a bale, for example individual straws from a straw bale.

It has been found that the cooperation of the feeding unit and the shredding unit allows improving the shredding action of the shredding unit, especially for example in the sense of loosening of compacted material into individual components as described above.

According to embodiments of the present invention, the shredding element is driven at its circumference so that the shape of the shredding element can be adapted more freely and for example so that a through-let opening can be provided in the shredding element at its rotational shred axis.

The shredding element, according to preferred embodiments, comprises a circumferential ring from which at least one, preferably more such as for example, two, three, four, five, six, seven, etc., engaging spoke axially protrudes toward the centre of the ring. The engaging spoke preferably is provided with at least one engaging tooth, preferably more such as for example two, three, four, five, six, seven, etc. , for engaging and shredding the agricultural product.

According to embodiments of the present invention, the feed element protrudes at least partly through the through-let opening towards the input opening as in such embodiment the feed element can pull the agricultural product towards the shredding element and further on to the blowing unit. In this case it has also been found that the interaction of the shredding unit and the feeding unit is improved, allowing an improved loosening of compacted material, for example, bales, for example, straw bales.

According to preferred embodiments of the current invention, the feed element protrudes at least partly through the through-let opening from the blow element towards the input opening as in such embodiment the feed element can pull the agricultural product towards the shredding element and further on to the blowing element.

According to preferred embodiments of the current invention, wherein at least two, preferably all, of the rotational feed axis, the rotational blow axis and the rotational shred axis are collinear as such configuration allows a fairly straightforward construction.

According to preferred embodiments of the current invention, at least one, preferably at least two, of the feed element, the blow element and the shredding element are provided to rotate with a different angular velocity. It has been found that in such a way, the different angular velocities of the different elements, if present, can be adapted to the specific situation in which they are used. Moreover, it is preferred that the angular velocity of the feed element and the shredding element is different as in such configuration it has been found that the shredding action, especially in the sense of loosening compacted material, is improved.

The invention also relates to use of the agricultural shredder according to the invention.

According to preferred embodiments of the current invention, the agricultural product is bedding product for example straw, hay, cornstalk, etc. Preferably the agricultural product is compacted such as for example in the form of bales, preferably square bales, although round bales are also possible. However, also other agricultural product is possible such as for example beets, apples, potatoes, etc.

According to preferred embodiments of the present invention, the agricultural shredder is used to provide a substrate for covering a floor, for example in a stable. For example, the agricultural shredder is used to provide bedding for animals, for example cows, horses, sheep, pigs, etc.

According to other preferred embodiments of the present invention, the agricultural shredder is used to provide food to animals and to blow the food product out off the output to the right place.

According to other preferred embodiments of the present invention, the agricultural shredder is used to shred agricultural product for further processing the shredded product in a fermenting installation, for example a biogas installation.

### Brief description of the drawings

The invention will be further elucidated by means of the following description and the appended figures.
Figure 1 shows a perspective view of an embodiment of an agricultural shredder according to the present invention.
Figure 2 shows a cross-section of the shredder according to figure 1.
Figure 3 shows a back view of the shredder according to figure 1.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

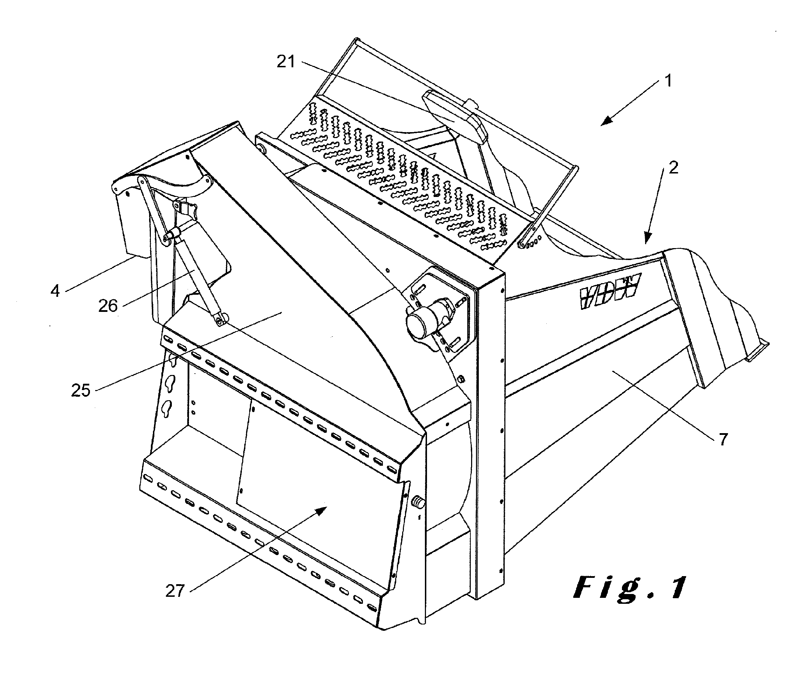

Figure 1 shows a preferred embodiment of the agricultural shredder 1 according to the present invention.

The agricultural shredder 1 shown in figure 1 comprises mounting means 27 for mounting the agricultural shredder to a transporting device, which itself is omitted from the figures. Although the agricultural shredder 1 can also be provided with its own transporting means, it is preferred that the agricultural shredder 1 can be removably mounted to a transporting device to allow the transporting device to be used for different purposes. Examples of transporting devices which can be used to mount the shredder 1 for example are: a tractor, a telescopic handler, etc. It has been found that making the shredder 1 removably mountable to a telescopic handler is advantageous as telescopic handlers are often available on a farm and have been found very suitable for this purpose. In case the shredder 1 is mounted to a telescopic handler, it preferably is mounted to the end of the boom of the telescopic handler, for example to the pallet fork if available.

Figure 1 for example shows that the mounting means comprise holes with which the shredder can be attached, for example by bolting, to the transporting device.

The shredder 1 further comprises an input opening 2 for loading the agricultural product into the shredder 1. The opening 2 preferably is adapted to the type of agricultural product is being loaded into the shredder 1.

In figure 1 it is shown that the opening 2 is delimited by a guiding channel 7 for guiding the agricultural product, more specifically to a shredding unit 3 of the shredder 1.

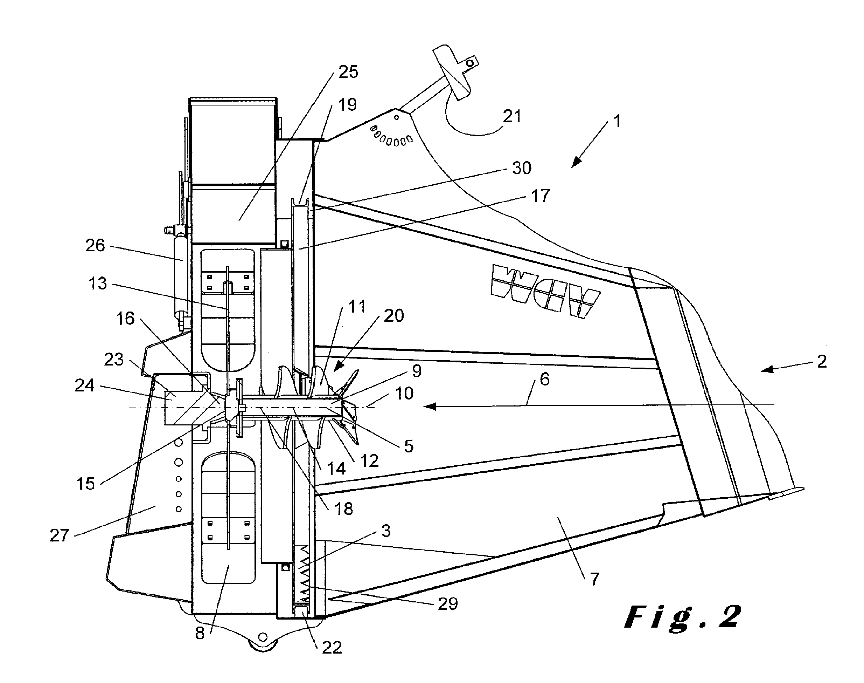

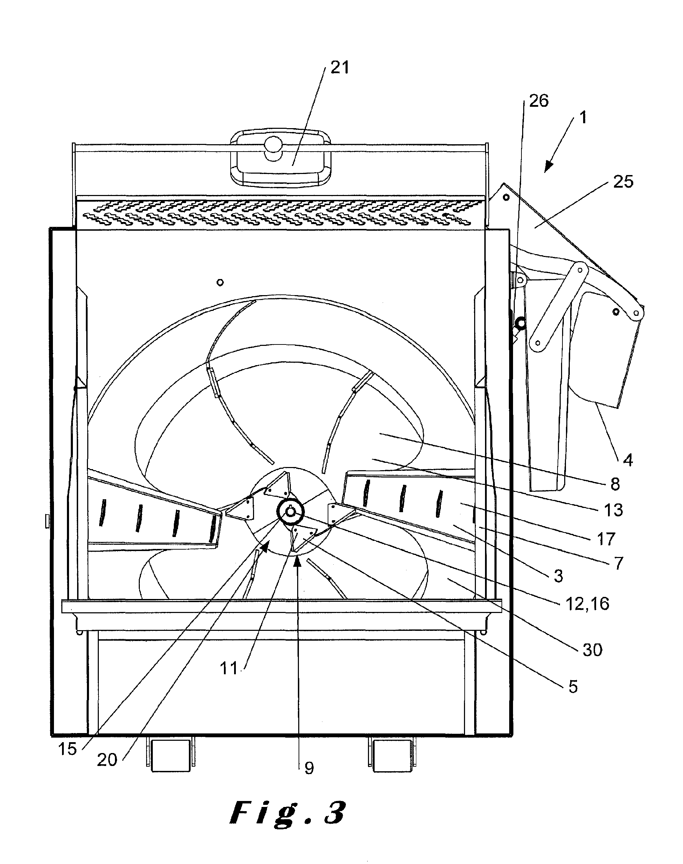

The shredding unit 3 is provided for shredding the agricultural product and is shown in more detail in figure 2 and 3. As can be seen in more detail in figure 3, the shredding unit 3 in this embodiment comprises a shredding element 17 mounted around a, fictional, rotational shred axis 18 positioned substantially along the guiding direction 6 and being provided to rotate such as to shred the agricultural product.

Figure 2 further shows that the shredding element 17 according to the embodiment shown is driven at its circumference 19. More specifically, the shredding element 17 has a through-let opening 20 at the rotational shred axis. The shredding element 17, according to the embodiment shown, comprises a circumferential ring 30 from which two engaging spokes 28 axially protrude toward the centre of the ring 30. The engaging spokes 28 are provided with at least one engaging tooth 29, in this case four, for engaging and shredding the agricultural product. As can be seen in figure 3, the engaging spokes 28 preferably are positioned regularly along the circumference of the ring 30.

The shredding unit 3 is schematically shown in figure 3 to comprise a shredding drive unit 22. The shredding drive unit 22 can be any type of drive unit that is deemed appropriate by the person skilled in the art. For example: a belt drive as shown in figure 2, a gear drive, etc.

The shredder 1 further comprises an output 4 for outputting the shredded agricultural product. The output 4 shown in the figures is provided with output adjustment means 16 which are provided to point the output 4 in a desired direction. The output adjustment means 16 shown are in the form of hydraulic or pneumatic adjustment means 16, this is however not critical for the invention and any other type of adjustment means 16 can be provided such as for example mechanical adjustment means using gears etc.

The shredder 1 shown in the figures further comprises a feeding unit 5 for transporting and feeding the agricultural product to the shredding unit 3 along a guiding direction 6.

The feeding unit 5 shown in the figures comprises a feed element 9. The feed element 9 is mounted around a, fictional, rotational feed axis 10 positioned substantially along the guiding direction 6 and is provided to rotate such as to transport and feed the agricultural product to the shredding unit 3 along the guiding direction 6.

As can be seen in figures 2 and 3, the feed element 9 comprises a screw 11 helically wound around a rotational feed shaft 12 positioned along the rotational feed axis 10. The rotational feed shaft 12 is provided to rotate the feed element 9 around the rotational feed axis 10.

As shown in figure 2, the feed unit 5 preferably comprises a feed drive unit 24 provided to drive the feed unit 5.

Further the figures 2 and 3 show that the shredder 1 comprises a blow unit 8 for blowing the shredded agricultural product from the shredding unit 3 to and out off the output 4. The blow unit 8 shown in figures 2 and 3 comprises a blow element 13 mounted around a, fictional, rotational blow axis 14 positioned substantially along the guiding direction 6 and being provided to rotate such as to blow the shredded agricultural product from the shredding unit 3 to and out off the output 4. Such blow units 8 are quite known in the prior art and are therefore not fully discussed here in detail.

As shown in the figures, the blow unit 8 comprises a blow channel 25 along which the shredded agricultural product is blown towards the output 4. The blow channel 25 here is positioned at the back of the shredder 1 near the mounting means 27 as this allows the shredder 1 to be made more compact. This is however not critical for the invention and the blow channel 25 can be positioned as deemed appropriate by the person skilled in the art.

As shown in figure 2, the blow unit 8 preferably comprises a blow drive unit 23 provided to drive the blow unit 8.

As can be seen in figure 2, the rotational feed shaft 12 preferably is positioned along the rotational blow axis 14 as such positioning allows a more simple construction.

As can be seen in figure 2, the blow element 13 is fixed to a rotational blow shaft 16 positioned along the rotational blow axis 14.The rotational blow shaft 16 is provided to rotate the blow element around the rotational blow axis 14.

In the embodiment shown in figure 2, the rotational feed shaft 12 is even fixed to the rotational centre 15 of the blow element 13, more particularly coaxially with respect to and fixed to the blow shaft 16. Therefore, the rotation of the blow element 13 also causes the rotation of the feed shaft 12 and , preferably in addition the blow drive unit 23 and the feed drive unit 24 are indicated as the same. Such an embodiment is however not critical for the present invention and the feed shaft 12 can also for example be driven independently from the rotation of the blow element 13. Thereto, for example, the feed drive unit 24 and the blow drive unit 23 can be independent drive units provided to independently drive respectively the blow element 13 and the feed element 9.

As can be seen in figure 2, the feed element 9 preferably protrudes at least partly through the through-let opening 20 from the blow element 13 towards the input opening 20. Although such an embodiment is preferred because of the engagement of the centre of the agricultural product, especially in the case of compacted agricultural material, the feed element 9 can also be positioned in any other way deemed appropriate by the person skilled in the art.

Figure 2 shows the preferred embodiment wherein all of the rotational feed axis 10, the rotational blow axis 14 and the rotational shred axis 18 are collinear. It is shown that such a configuration allows relatively simple, lightweight and small construction of the shredder 3.

In the embodiment shown in the figures, the shredding drive 22 unit on the one hand and the blow drive unit 23 and the feed drive 24 unit on the other hand are different. Such a configuration has been found to allow rotating the blow element 13 and the feed element 9 at a different angular velocity as the shredding element 17 and even allows changing the direction of rotation of the blow element 13 and the feed element 9 with respect to the shredding element 17. Preferably, the direction of rotation of the shredding element 17 is being alternated as changing the direction of rotation of the blow element 13 has an influence on the blowing of the shredded agricultural material which is usually less desired. Such a difference in angular velocity between the blow element 13 and the feed element 9 with respect to the shredding element 17 can be used to increase the shredding effect of the shredding element 17 and the feed element 9.

According to preferred embodiments of the present invention, the angular velocity of the shredding element 17 is relatively slow with respect to the blow element 13 and the feed element 9, for example less than half or even a tenth of the angular velocity of the blow element 13 and/or the feed element 9.

According to preferred embodiments of the present invention, the angular velocity of the shredding element 17 is in the range of between 10 - 60 rotations per minute, preferably for example 30 rotations per minute.

According to preferred embodiments of the present invention, the angular velocity of the feed element 9 is in the range of between 400 - 600 rotations per minute, preferably for example 540 rotations per minute.

According to preferred embodiments of the present invention, the angular velocity of the blow element 13 is in the range of between 400 - 600 rotations per minute, preferably for example 540 rotations per minute or for example 500 rotations per minute.

Preferably, the different drive units provided to the shredder 3 are hydraulically driven. This is however not critical for the invention and the different drive units can also be driven pneumatically, by an internal combustion engine, by an electromotor, etc.

As can be seen in the figures, the shredder 1 is also provided with a mirror 21, preferably an adjustable mirror 21 such as to allow to take a look in the shredder from the mounting place of the shredder 1, the mounting place opposing the input opening 2 along guiding direction 6 of the shredder 1. The presence of the mirror is however not critical for the invention. The mirror can also be replaced with, for example, a camera although such a configuration would further complicate the shredder 1.

The material of the different components of the shredder 1 can be chosen by the person skilled in the art and can for example by metal, for example steel or even aluminium, taking the desired reduction in weight into account.

According to preferred embodiments of the present invention, the guiding channel 7 is removably mounted to the remainder of the shredder 3 so as to allow, for example, a more compact storage of the shredder 3 when not in use.

### List of references:

- 1: agricultural shredder
- 2: input opening
- 3: shredding unit
- 4: output
- 5: feeding unit
- 6: guiding direction
- 7: guiding channel
- 8: blow unit
- 9: feed element
- 10: rotational feed axis
- 11: screw
- 12: rotational feed shaft
- 13: blow element
- 14: rotational blow axis
- 15: rotational centre
- 16: rotational blow shaft
- 17: shredding element
- 18: rotational shred axis
- 19: circumference shredding element
- 20: through-let opening
- 21: adjustable mirror
- 22: shredding drive unit
- 23: blow drive unit
- 24: feed drive unit
- 25: blow channel
- 26: output adjustment means
- 27: mounting means
- 28: engaging spoke
- 29: engaging tooth
- 30: ring

## Claims

1. An agricultural shredder (1) for shredding agricultural product, comprising:
a) an input opening (2) for loading the agricultural product into the shredder (1),
b) a shredding unit (3) for shredding the agricultural product,
c) an output (4) for outputting the shredded agricultural product,
d) a feeding unit (5) for transporting and feeding the agricultural product to the shredding unit (3) along a guiding direction (6), comprising a guiding channel (7) for guiding the agricultural product and
e) a blow unit (8) for blowing the shredded agricultural product from the shredding unit (3) to and out off the output (4), **characterized in that**
the feeding unit (5) comprises a feed element (9), the feed element (9) being mounted around a rotational feed axis (10) positioned substantially along the guiding direction (6) and being provided to rotate such as to transport and feed the agricultural product to the shredding unit (3) along the guiding direction (6).

2. The agricultural shredder (1) according to claim 1, wherein the feed element (9) is provided for pulling the agricultural product to the shredding unit (3).

3. The agricultural shredder (1) according to any one of the preceding claims, wherein the feed element (9) comprises a screw (11) helically wound around a rotational feed shaft (12) positioned along the rotational feed axis (10), the rotational feed shaft (12) being provided to rotate the feed element (9) around the rotational feed axis (10).

4. The agricultural shredder (1) according to any one of the preceding claims, wherein the blow unit (8) comprises a blow element (13) mounted around a rotational blow axis (14) positioned substantially along the guiding direction (6) and being provided to rotate such as to blow the shredded agricultural product from the shredding unit (3) to and out off the output (4).

5. The agricultural shredder (1) according to claim 4 at least depending from claim 3, wherein the rotational feed shaft (12) is positioned along the rotational blow axis (14).

6. The agricultural shredder (1) according to claim 5, wherein the rotational feed shaft (12) is fixed to the rotational centre (15) of the blow element (13).

7. The agricultural shredder (1) according to any one of claims 4 - 6, wherein the blow element (13) is fixed to a rotational blow shaft (16) positioned along the rotational blow axis (14), the rotational blow shaft (16) being provided to rotate the blow element around the rotational blow axis (14).

8. The agricultural shredder (1) according to claim 7 at least depending from claim 3, wherein the blow shaft (16) and the feed shaft (12) are coaxially mounted.

9. The agricultural shredder (1) according to claim 8, wherein the blow shaft (16) and the feed shaft (12) are fixed to each other.

10. The agricultural shredder (1) according to any one of the preceding claims, wherein the shredding unit (3) comprises a shredding element (17) mounted around a rotational shred axis (18) positioned substantially along the guiding direction (6) and being provided to rotate such as to shred the agricultural product.

11. The agricultural shredder (1) according to claim 10, wherein the shredding element (17) is driven at its circumference (19).

12. The agricultural shredder (1) according to any one of claims 10 or 11, wherein the shredding element (17) has a through-let opening (20) at the rotational shred axis.

13. The agricultural shredder (1) according to claim 12 at least in combination with claim 3, wherein the feed element (9) protrudes at least partly through the through-let opening (20) towards the input opening (20).

14. The agricultural shredder (1) according to claim 13 at least in combination with claim 4, wherein the feed element (9) protrudes at least partly through the through-let opening (20) from the blow element (13) towards the input opening (2).

15. The agricultural shredder (1) according to any one of the preceding claims at least depending from claims 4 and 10, wherein at least two, preferably all, of the rotational feed axis (10), the rotational blow axis (14) and the rotational shred axis (18) are collinear.

16. The agricultural shredder (1) according to any one of the preceding claims at least depending from claims 4 and 10, wherein at least one, preferably at least two, of the feed element (9), the blow element (13) and the shredding element (17) are provided to rotate with a different angular velocity.

17. Use of the agricultural shredder (1) according to any one of the preceding claims.

18. Use of the agricultural shredder (1) according to any one of the preceding claims, wherein the agricultural product is straw.
